# EUROPEAN PATENT SPECIFICATION

(11) **EP 3 986 750 B1**
(45) Date of publication and mention of the grant of the patent: **27.09.2023**
(21) Application number: 20743884.7
(22) Date of filing: 12.06.2020
(51) Int. Cl.: B60R 7/04, A47B 57/40, B62D 33/06, B60R 11/00

(54) **A ROAD VEHICLE AND A CLEAT FOR USE IN SUCH A ROAD VEHICLE**
STRASSENFAHRZEUG UND STOLLEN ZUR VERWENDUNG BEI EINEM SOLCHEN STRASSENFAHRZEUG
VÉHICULE ROUTIER ET CRAMPON DESTINÉ À ÊTRE UTILISÉ DANS LEDIT VÉHICULE ROUTIER

(30) Priority: 19.06.2019 NL 2023346
(43) Date of publication of application: 27.04.2022
(73) Proprietor: Daf Trucks N.V., 5643 TW Eindhoven (NL)
(72) Inventor: VAN OIRSCHOT, Petrus Adrianus, 5643 TW Eindhoven (NL); SCHMITT, Thomas, 5643 TW Eindhoven (NL)
(74) Representative: V.O.
(86) International application number: PCT/NL2020/050375
(87) International publication number: WO 2020/256539

(56) References cited:
- CA-A- 1 191 115
- DE-A1-102016 004 768
- US-B1- 6 733 061
- US-B2- 7 819 454

## Description

The invention relates to a cleat according to the preamble of claim 1. Such a cleat can be used in a road vehicle having a driver cabin, said driver cabin comprising a cabin wall, said cabin wall having an upper wall part having an inner front surface and a back surface and comprising a cleat receiver with a cleat receiver opening defined by a lower cleat receiver opening edge, an upper cleat receiver opening edge and cleat receiver opening side edges, said cleat receiver opening having a cleat receiver opening width and a cleat receiver opening height, said driver cabin further comprising a storage compartment or other heavy structure and said cleat, said cleat being attached to an upper part of the storage compartment or other heavy structure, and said cleat engaging said cleat receiver, said cleat comprising:
- a cleat base portion attached to the storage compartment or other heavy structure;
- an arm portion protruding from the cleat base portion to the inner front surface of the upper wall part, the arm portion having a lower arm surface engaging the lower cleat receiver opening edge, the arm portion having an upper arm surface, and the arm portion having an arm thickness defined by a minimal distance between the lower arm surface and the upper arm surface;
- a forward end hook portion protruding from the arm portion, said forward end hook portion having a hook portion upper surface in line with the upper arm surface and a hook portion lower surface, said hook portion upper surface having a forward hook portion edge and said forward end hook portion having a hook portion thickness defined by the maximum distance between the hook portion upper surface and the hook portion lower surface, said hook portion thickness being larger than the arm thickness and a hook portion holding surface directed to the cleat base portion and engaging the back surface of the upper wall part of the driver cabin;
- a spring biased retaining block slidably arranged on the arm portion between a cleat locking position and a cleat release position, said spring biased retaining block having a forward retaining block surface, said retaining block being spring biased away from the cleat base portion into the cleat locking position, said retaining block being arranged to be slid against the spring bias in a direction towards the cleat base portion for bringing the forward retaining block surface into the cleat release position at a release distance from the forward hook portion edge.

Such a road vehicle is known from DE 102016004768A1, disclosing the preamble of claim 1. The known road vehicle is in particular destined for operation on the ground and comprises a vehicle cabin. For installing the stowage cabinet this known vehicle comprises a fastening device comprising a hooking element to be inserted/hooked in a cleat receiver opening in the vehicles framework and a mechanism preventing that the fastening device, after installation, is unintentionally unhooked from its mounted position during e.g. a traffic accident. The mechanism comprises a locking element provided with a retaining block - arranged movable/slideable in a horizontal direction, against the force of a spring biased part - which is arranged during installation to move into a free space between the hooking element and an inner/upper edge of the cleat receiver opening. The locking element is fixed in relation to the hooking element but is a separate unit detachable from the hooking element. The locking element comprises the spring biased part which is provided as a U-shaped spring biased outer leg/part on which the retaining block is arranged. Conventional fasteners are additionally used to secure a lower part of the stowage cabinet to the framework of the vehicle cabin. There is a desire in the field to further improve ease of installation of storage compartments or other heavy structures in driver cabin's using relatively simple fastening devices while at the same time providing a mounting of storage compartments or other heavy structures in driver cabins that can withstand the forces acting on the storage compartments or other heavy structures, in particular on the cleat and additional fasteners, during crashes, especially frontal crashes and during strong vibrations generated when driving on poor roads.

It is thus an object of the present invention to provide an alternative road vehicle in which a storage compartment or other heavy structure can be installed relatively easy with a relatively simple fastening device while at the same time providing an attachment of the storage compartment or other heavy structure in the driver cabin that prevents unwanted release of the storage compartment or other heavy structure during crashes of the commercial vehicle or during driving on poor roads.

In order to achieve this object the invention provides a cleat according to claim 1. By means of the cleat mounting holes in the lower extension of the cleat base portion the cleat can be attached to a component, such as a storage compartment or other heavy structure, for mounting this component in for example a commercial vehicle. Preferably the spring biased retaining block has side surfaces provided with recesses for ease of grasping the spring biased retaining block. In case a storage compartment or other heavy structure is to be removed from the driver cabin these recesses provide a de-installer with an easy means to manually grasp the spring biased retaining block and pull it against the spring bias into the cleat release position after which the cleat can be pulled out of the cleat receiver opening thereby de-installing the storage compartment or other heavy structure. Preferably the spring biased retaining block is provided with guiding channels in which flanges of the guiding profile are received, such that the spring biased guiding block is securely held on the guiding profile. The cleat release position and the cleat locking position are preferably defined by stops provided on the upper arm surface of the cleat.

The invention is based on the insight that since in the known vehicle the locking element is a separate unit detachable from the hooking element use of the fastening device for installing overhead storage cabinets entails an additional operation to attach the locking element to the hooking element. In addition, for removably attaching locking element to the hooking element in the known vehicle a recess is provided in the lower part of the hooking element and a corresponding protruding part - intended to be received in the recess - is provided on the locking element. It has appeared that in particular during accidents the protruding element can disengage from the recess thereby providing a risk that the stowage cabinet can become disengages from the vehicle cabin wall. In accordance with the invention since the spring biased retaining block is guided on the guiding profile, detachment of the retaining block during e.g. accidents is strongly reduced when the cleat is used in a road vehicle according to claim 3. Installation is facilitated, since during installation of the storage compartment or other heavy structure in the wall of the driver cabin the spring biased retaining block can be easily manually withdrawn into the cleat release position or can be pushed into the cleat release position upon contact with the wall of the driver cabin, such that the forward end hook portion of the cleat can be inserted into the cleat receiver opening since the total dimension of the hook portion thickness and the guiding profile height is smaller than the cleat receiver opening height. Upon further insertion into the cleat receiver opening and lowering of the storage compartment or other heavy structure the lower arm surface comes into contact with the lower cleat receiver opening edge, thereby providing sufficient room for the spring biased retaining block to be biased into the cleat locking position. Not only that by these measures installation of the storage compartment or other heavy structure in the driver cabin is relatively easy but also - since the total dimension of the arm thickness, the guiding profile height and the retaining block height matches the cleat receiver opening height - it is prevented in the cleat locking position that the cleat is lifted out of the cleat receiver opening when forces act on the storage compartment or other heavy structure, which forces are for example generated during crashes or when driving on poor roads. The cleat can for example be attached to the upper part of the storage compartment or other heavy structure by any conventional attachment means or can be an integral part of the storage compartment or other heavy structure.

In an embodiment of a road vehicle according to claim 4 said cabin wall has a wall portion positioned below the upper wall part, said wall portion being provided with wall mounting holes, wherein the storage compartment or other heavy structure having a lower part provided with cabinet mounting holes and wherein the road vehicle comprises fasteners, for example conventional fasteners such as screws and bolts and nuts, extending through the cabinet mounting holes and the wall mounting holes. In this manner the storage compartment or other heavy structure is additional secured to the wall of the driver cabin, thereby additionally preventing unwanted release of the storage compartment or other heavy structure during for example crashes.

In a further embodiment of a road vehicle according claim 5 the forward end hook portion has a hook portion width, said hook portion width matching the cleat receiver opening width. In this manner the cleat is enclosed sideways in the cleat receiver opening, thereby additionally preventing unwanted release of the storage compartment or other heavy structure during for example crashes.

The invention will be further explained with reference to the Figures, in which non-limiting exemplary embodiments of a road vehicle with a storage compartment or other heavy structure mounted in a driver cabin thereof by means of a cleat according to the invention are shown:
Fig. 1 schematically shows in side view an embodiment of a road vehicle with a driver cabin and a stowage cabinet with a cleat according to the invention;
Figure 2A schematically in perspective shows a stowage cabinet with two cleats and a part of a wall of the driver cabin of the road vehicle of Figure 1 in a position just before mounting the stowage cabinet in the wall of the driver cabin;
Fig. 2B schematically in perspective shows a cleat receiver opening in the wall of the driver cabin as shown in Fig. 2A;
Figure 3 schematically in perspective shows a cleat according to the invention as shown in Fig. 2; and
Figures 4A-4D schematically show in perspective several stages of mounting a stowage cabinet to a wall of a driver cabin of the road vehicle shown in Fig. 1

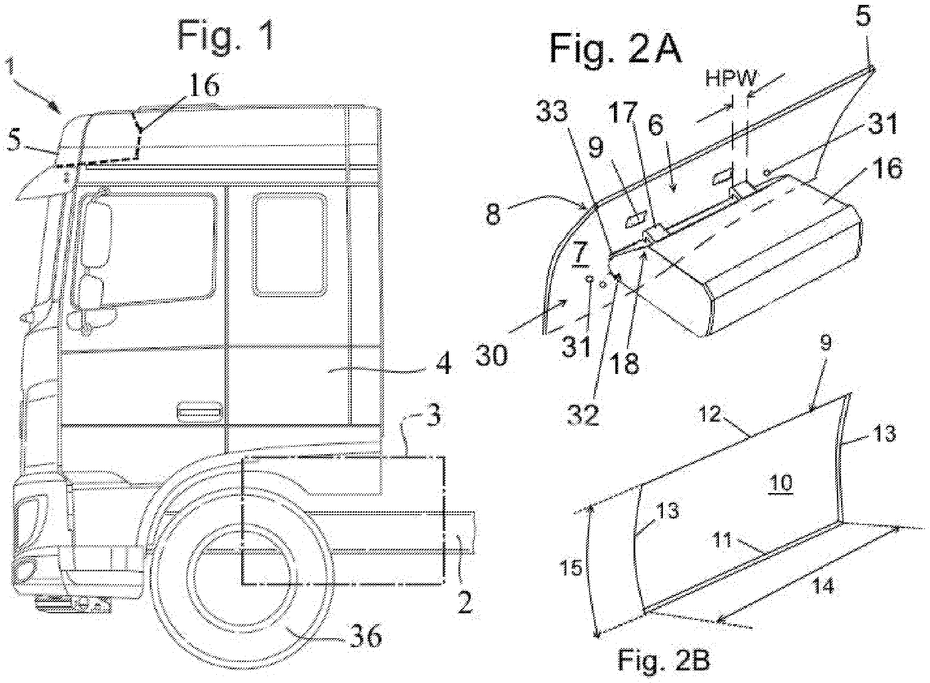

In Fig. 1 an embodiment of a road vehicle 1 with a driver cabin 4 is schematically shown in side view. In the embodiment shown the road vehicle is depicted as a commercial motor vehicle 1 having a chassis and an engine compartment 3. It will however be clear that the invention is not limited to commercial motor vehicles but can be applied to any other known road vehicle. The driver cabin 4 is supported on the chassis 2 and comprises a cabin wall 5. As shown in Figure 2A the cabin wall 5 has an upper wall part 6 with an inner front surface 7 and a back surface 8. The cabin wall 5 further comprises a cleat receiver 9 with a cleat receiver opening 10. The cleat receiver opening 10 (see Figure 2B) which is preferably rectangular is defined by a lower cleat receiver opening edge 11, an upper cleat receiver opening edge 12 and cleat receiver opening side edges 13. The cleat receiver opening 10 has a cleat receiver opening width 14 and a cleat receiver opening height 15. The road vehicle 1 is in particular destined for ground operation and is supported on the ground surface by means of wheels 36.

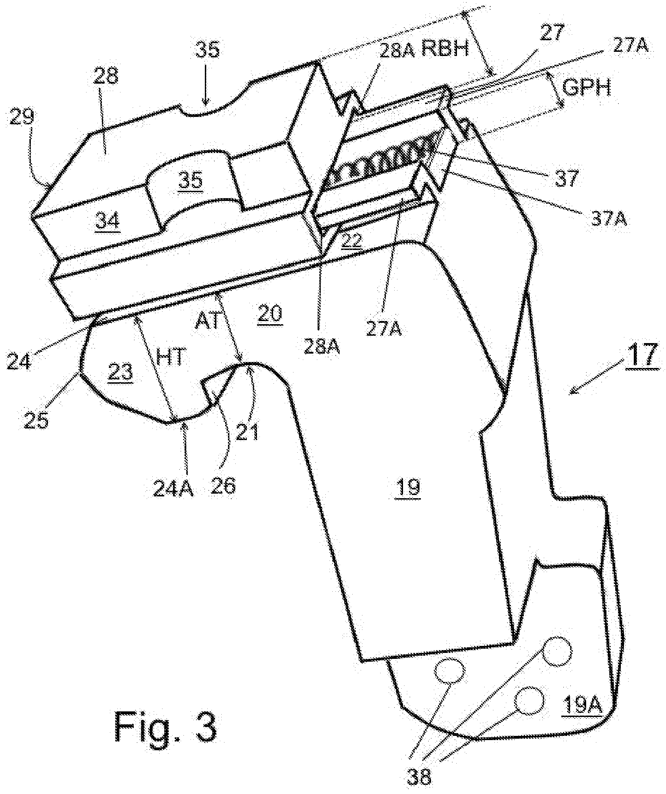

As indicated in Figures 1 and 2 the driver cabin 4 of the road vehicle 1 further comprises a stowage cabinet 16, which in the embodiment shown is provided in the top front of the driver cabin 4. Please note that the invention is not restricted to mounting of stowage cabinets, but that any other kind of storage compartment or heavy structure can be mounted to a wall of a driver cabin by using the present invention. It is clear that in other embodiments the stowage cabinet 16 can be arranged in other positions in the driver cabin 4. A cleat 17 (see e.g. Figure 2) is attached to an upper part 18 of the stowage cabinet 16 and engages the cleat receiver 9 for mounting the stowage cabinet 16 on the wall 5 of the driver cabin 4. The cleat 17 can for example be a separate part (as for example shown in the embodiment of Figure 3) which can be attached to the upper part 18 of the stowage cabinet 16 by any conventional attachment means or can be in another embodiment (not shown) be an integral part of the stowage cabinet 16.

The cabin wall 5 has a wall portion 30 positioned below the upper wall part 6, which wall portion 30 is provided with wall mounting holes 31 The stowage cabinet 16 has a lower part 32 provided with cabinet mounting holes 33. In the shown embodiment conventional fasteners (not shown) such as screws and bolts and nuts extending through the cabinet mounting holes 33 and the wall mounting holes 31 are used to in addition to the cleat 17 engaging the cleat receiver 9 secure the stowage cabinet 16 to the wall 5.

As schematically in perspective shown in Figure 3 the cleat 17 comprises a cleat base portion 19 with a lower extension 19A provided with cleat mounting holes 38 for attaching the cleat 17 to the stowage cabinet 16. An arm portion 20 of the cleat 17 protrudes from the cleat base portion 19 in an arm portion extension direction substantially perpendicular to the cleat base portion 19 and substantially perpendicular to the inner front surface 7 of the upper wall part 6 when the stowage cabinet 16 is mounted in the driver cabin 4. The arm portion 20 has a lower arm surface 21 which engages the lower cleat receiver opening edge 11 when the stowage cabinet 16 is mounted in the driver cabin 4. The arm portion 20 has an upper arm surface 22 and an arm thickness AT which is defined by a minimal distance between the lower arm surface 21 and the upper arm surface 22.

A forward end hook portion 23 of the cleat protrudes from the arm portion 20. A hook portion upper surface 24 of the forward end hook portion 23 is in line with the upper arm surface 22. The forward end hook portion 23 further has a hook portion lower surface 24A opposite the hook portion upper surface 24. The hook portion upper surface 24 is provide with a forward hook portion edge 25. The forward end hook portion 23 has a hook portion thickness HT which is defined by the maximum distance between the hook portion upper surface 24 and the hook portion lower surface 24A. The hook portion thickness HT is larger than the arm thickness AT. When the stowage cabinet 16 is mounted in the driver cabin 4 a hook portion holding surface 26 which is directed to the cleat base portion 19 engages the back surface 8 of the upper wall part 6 of the driver cabin 4. In the shown embodiment a hook portion width HPW of the forward end hook portion 23 matches the cleat receiver opening width 14.

The cleat 17 is further provided with a guiding profile 27 integrally arranged at the upper arm surface 22. The guiding profile 27 extends in the arm portion extension direction and protrudes with a guiding profile height GPH above the upper arm surface 22. The cleat 17 is constructed such that the total dimension of the arm thickness AT and the guiding profile height GPH is smaller than the cleat receiver opening height 15.

A spring biased retaining block 28 of the cleat 17 is slidably arranged on the guiding profile 27 between a cleat locking position and a cleat release position. According to the embodiment shown in Figure 3 the spring biased retaining block 28 is provided with guiding channels 28A in which flanges 27A of the guiding profile 27 are received, such that the spring biased guiding block 28 is securely held on the guiding profile 27. As indicated in Figure 3 the cleat release position and the cleat locking position are preferably defined by stops 37A for the cleat release position and a corresponding stop for the cleat locking position provided on the upper arm surface 22 of the cleat 17, thereby further ensuring that the spring biased gliding block 28 is securely held on the guiding profile 27. The spring biased retaining block 28 has a forward retaining block surface 29 and side surfaces 34 provided with recesses 35. These recesses 35 provide a de-installer with an easy means to manually grasp the spring biased retaining block 28 and pull it against the spring bias into the cleat release position. The retaining block 28 is spring biased away from the cleat base portion 19 into the cleat locking position in which the forward retaining block surface 29 is positioned above the forward hook portion edge 25. The retaining block 28 is arranged to be slid against the spring bias in a direction towards the cleat base portion 19 for bringing the forward retaining block surface 29 into the cleat release position at a release distance from the forward hook portion edge 25.

As indicated in Figure 3 the spring biased retaining block 28 extends at a retaining block height RBH above the guiding profile height GPH. The total dimension of the arm thickness AT, the guiding profile height GPH and the retaining block height RBH matches the cleat receiver opening height 15 and the total dimension of the hook portion thickness HT. The guiding profile height GPH is smaller than the cleat receiver opening height 15 to assist in easy mounting of the stowage cabinet 16 in the driver cabin 4 as will be described below.

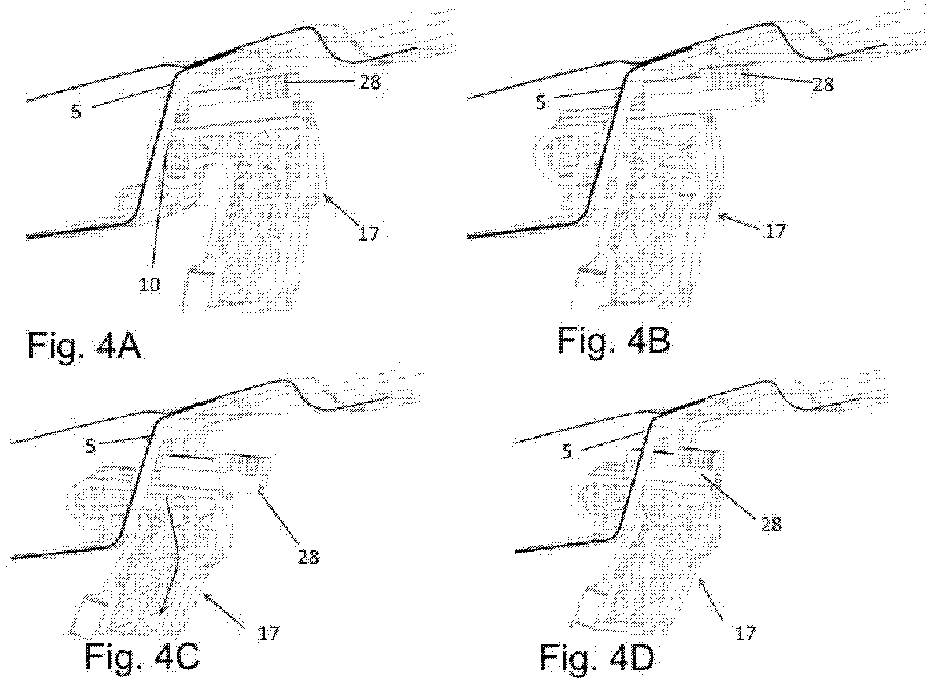

With reference to Figures 4A-4D the stages of mounting the stowage cabinet 16 to the wall 5 of the driver cabin 4 of the road vehicle 1 shown in Fig. 1 will now be described. As shown in Figure 4A for installing the stowage cabinet 16 in the wall 5 of the driver cabin 4 an installer manually withdraws the spring biased retaining block 28 into the cleat release position and then moves the stowage cabinet 16 in the direction of the wall 5 such that the cleat 17 enters the cleat receiver opening 10. Alternatively, the spring biased retaining block 28 can be pushed automatically into the cleat release position upon contact with the wall 5 of the driver cabin 4 when the installer moves the stowage cabinet 16 in the direction of the wall 5 such that the cleat 17 enters the cleat receiver opening 10.

When the spring biased retaining block 28 is in the cleat release position the forward end hook portion 23 of the cleat 17 can be inserted further into the cleat receiver opening 10 (see Figure 4B) since the total dimension of the hook portion thickness HT and the guiding profile height GPH is smaller than the cleat receiver opening height 15. The installer then further inserts the cleat 17 into the cleat receiver opening 10 and lowers of the stowage cabinet 16 such that the lower arm surface 21 comes into contact with the lower cleat receiver opening edge 11. When the lower arm surface 21 is into contact with the lower cleat receiver opening edge 11, the spring biased retaining block 28 is not in contact any more with the inner front surface 7 of the wall 5 of the driver cabin 4 and - optionally upon swiveling the stowage cabinet a bit downward as shown in Figure 4C - there is provided sufficient room for the spring biased retaining block 28 to be biased into the cleat locking position as indicated in Figure 4D. In the cleat locking position shown in Figure 4D the total dimension of the arm thickness AT, the guiding profile height GPH and the retaining block height RBH matches the cleat receiver opening height 15 and it is thus prevented that the cleat 17 is lifted out of the cleat receiver opening 10 when forces act on the stowage cabinet 16, which forces can for example be generated during crashes.

In case the stowage cabinet 16 needs to be de-installed from the driver cabin 4 a de-installer first manually grasp the spring biased retaining block 28 at the position of the recesses 35 and pulls it against the spring bias into the cleat release position after which the cleat 17 can be pulled out of the cleat receiver opening 10 thereby de-installing the stowage cabinet 16.

## Claims

1. A cleat (17) comprising:
- a cleat base portion (19) having a lower extension (19A) provided with cleat mounting holes (38);
- an arm portion (20) having a lower arm surface (21), an upper arm surface (22) and an arm thickness (AT) defined by a minimal distance between the lower arm surface (21) and the upper arm surface (22);
- a forward end hook portion (23) protruding from the arm portion (20), said forward end hook portion (23) having a hook portion upper surface (24) in line with the upper arm surface (22) and a hook portion lower surface (24A), said hook portion upper surface (24) having a forward hook portion edge (25) and said forward end hook portion (23) having a hook portion thickness (HT) defined by the maximum distance between the hook portion upper surface (24) and the hook portion lower surface (24A), said hook portion thickness (HT) being larger than the arm thickness (AT) and a hook portion holding surface (26) directed to the cleat base portion (19);
- a spring biased retaining block (28) slidably arranged on the arm portion (20) between a cleat locking position and a cleat release position, said spring biased retaining block (28) having a forward retaining block surface (29), said retaining block (28) being spring biased away from the cleat base portion (19) into the cleat locking position, said retaining block (28) being arranged to be slid against the spring bias in a direction towards the cleat base portion (19) for bringing the forward retaining block surface (29) into the cleat release position at a release distance from the forward hook portion edge (25);
**characterized in that** the arm portion (20) protrudes from the cleat base portion (19) in an arm portion extension direction substantially perpendicular to the cleat base portion (19), and **in that** said cleat (17) comprises:
- a guiding profile (27) integrally arranged at the upper arm surface (22), said guiding profile (27) extending in the arm portion extension direction, the guiding profile (27) protruding with a guiding profile height (GPH) above the upper arm surface (22);
- the spring biased retaining block (28) is slidably arranged on the guiding profile (27) between the cleat locking position and the cleat release position, said spring biased retaining block (28) having a forward retaining block surface (29), said retaining block (28) being spring biased away from the cleat base portion (19) into the cleat locking position in which the forward retaining block surface (29) is positioned above the forward hook portion edge (25), said retaining block (28) being arranged to be slid against the spring bias in a direction towards the base portion for bringing the forward retaining block surface (29) into the cleat release position at a release distance from the forward hook portion edge (25); said spring biased retaining block (28) extending at a retaining block height (RBH) above the guiding block height.

2. The cleat (17) according to claim 1, wherein the spring biased retaining block (28) has side surfaces (34) provided with recesses (35).

3. A road vehicle (1) having a driver cabin (4), said driver cabin (4) comprising a cabin wall (5), said cabin wall (5) having an upper wall part (6) having an inner front surface (7) and a back surface (8) and comprising a cleat receiver (9) with a cleat receiver opening (10) defined by a lower cleat receiver opening edge (11), an upper cleat receiver opening edge (12) and cleat receiver opening side edges (13), said cleat receiver opening (10) having a cleat receiver opening width (14) and a cleat receiver opening height (15), said driver cabin (4) further comprising a storage compartment or other heavy structure (16) and a cleat (17) according to any one of the preceding claims, said cleat (17) being attached to an upper part (18) of the storage compartment or other heavy structure (16), and said cleat (17) engaging said cleat receiver (9), :
- the cleat base portion (19) being attached to the storage compartment or other heavy structure (16);
- the arm portion (20) protruding from the cleat base portion (19) to the inner front surface (7) of the upper wall part (6), the lower arm surface (21) engaging the lower cleat receiver opening edge (11;
the hook portion holding surface (26) engaging the back surface (8) of the upper wall part (6) of the driver cabin (4);
the total dimension of the arm thickness (AT) and the guiding profile height (GPH) being smaller than the cleat receiver opening height (15);
the total dimension of the arm thickness (AT), the guiding profile height (GPH) and the retaining block height (RBH) matching the cleat receiver opening height (15) and the total dimension of the hook portion thickness (HT) and the guiding profile height (GPH) being smaller than the cleat receiver opening height (15).

4. The road vehicle (1) according to claim 3, wherein said cabin wall (5) has a wall portion (30) positioned below the upper wall part (6), said wall portion (30) being provided with wall mounting holes (31), wherein the storage compartment or other heavy structure (16) having a lower part (32) provided with cabinet mounting holes (33) and wherein the road vehicle (1) comprises fasteners extending through the cabinet mounting holes (33) and the wall mounting holes (31).

5. The road vehicle (1) according to claim 3 or 4, wherein the forward end hook portion (23) has a hook portion width (HPW), said hook portion width (HPW) matching the cleat receiver opening width (14).

## Patentansprüche

1. Klampe (17), umfassend:
- einen Klampenbasisabschnitt (19) mit einer unteren Verlängerung (19A), die mit Klampenbefestigungslöchern (38) versehen ist;
- einen Armabschnitt (20) mit einer unteren Armoberfläche (21), einer oberen Armoberfläche (22) und einer Armdicke (AT), die durch einen Mindestabstand zwischen der unteren Armoberfläche (21) und der oberen Armoberfläche (22) definiert ist;
- einen vordere Endhakenabschnitt (23), der aus dem Armabschnitt (20) herausragt, wobei der vordere Endhakenabschnitt (23) eine obere Hakenabschnittsoberfläche (24) in einer Linie mit der oberen Armoberfläche (22) und eine untere Hakenabschnittsoberfläche (24A) aufweist, wobei die obere Hakenabschnittsoberfläche (24) eine vordere Hakenabschnittskante (25) aufweist und der vordere Endhakenabschnitt (23) eine Hakenabschnittsdicke (HT) aufweist, die durch den maximalen Abstand zwischen der oberen Hakenabschnittsoberfläche (24) und der unteren Hakenabschnittsoberfläche (24A) definiert ist, wobei die Hakenabschnittsdicke (HT) größer als die Armdicke (AT) ist, und eine Hakenabschnitt-Haltefläche (26) aufweist, die zum Klampenbasisabschnitt (19) gerichtet ist;
- einen federvorgespannten Halteblock (28), der auf dem Armabschnitt (20) zwischen einer Klampenverriegelungsposition und einer Klampenentriegelungsposition verschiebbar angeordnet ist, wobei der federvorgespannte Halteblock (28) eine vordere Halteblockoberfläche (29) aufweist, wobei der Halteblock (28) von dem Klampenbasisabschnitt (19) weg in die Klampenverriegelungsposition federvorgespannt ist, wobei der Halteblock (28) so angeordnet ist, dass er gegen die Federvorspannung in Richtung auf den Klampenbasisabschnitt (19) gleitet, um die vordere Halteblockoberfläche (29) in die Klampenentriegelungsposition in einem Entriegelungszustand von der vorderen Hakenabschnittskante (25) zu bringen;
**dadurch gekennzeichnet, dass** der Armabschnitt (20) von dem Klampenbasisabschnitt (19) in einer Erstreckungsrichtung des Armabschnitts im Wesentlichen senkrecht zu dem Klampenbasisabschnitt (19) vorsteht, und dass die Klampe (17) umfasst:
- ein Führungsprofil (27), das einstückig an der oberen Armoberfläche (22) angeordnet ist, wobei sich das Führungsprofil (27) in der Erstreckungsrichtung des Armabschnitts erstreckt, wobei das Führungsprofil (27) mit einer Führungsprofilhöhe (GPH) über die obere Armoberfläche (22) vorsteht;
- der federvorgespannte Halteblock (28) auf dem Führungsprofil (27) zwischen der Klampenverriegelungsposition und der Klampenentriegelungsposition verschiebbar angeordnet ist, wobei der federvorgespannte Halteblock (28) eine vordere Halteblockoberfläche (29) aufweist, wobei der Halteblock (28) von dem Klampenbasisabschnitt (19) weg in die Klampenverriegelungsposition federvorgespannt ist, in der die vordere Halteblockoberfläche (29) über der vorderen Hakenabschnittskante (25) positioniert ist, wobei der Halteblock (28) so angeordnet ist, dass er gegen die Federvorspannung in Richtung auf den Basisabschnitt gleitet, um die vordere Halteblockoberfläche (29) in die Klampenentriegelungsposition in einem Entriegelungsabstand von der vorderen Hakenabschnittskante (25) zu bringen; wobei der federvorgespannte Halteblock (28) sich in einer Halteblockhöhe (RBH) über der Führungsblockhöhe erstreckt.

2. Klampe (17) nach Anspruch 1, wobei der federbelastete Halteblock (28) Seitenflächen (34) aufweist, die mit Aussparungen (35) versehen sind.

3. Straßenfahrzeug (1) mit einer Fahrerkabine (4), wobei die Fahrerkabine (4) eine Kabinenwand (5) umfasst, wobei die Kabinenwand (5) einen oberen Wandteil (6) mit einer inneren Vorderfläche (7) und einer Rückfläche (8) aufweist und eine Klampenaufnahme (9) mit einer Klampenaufnahmeöffnung (10) umfasst, die durch eine untere Klampenaufnahmeöffnungskante (11), eine obere Klampenaufnahmeöffnungskante (12) und Klampenaufnahmeöffnungsseitenkanten (13) definiert ist, wobei die Klampenaufnahmeöffnung (10) eine Klampenaufnahmeöffnungsbreite (14) und eine Klampenaufnahmeöffnungshöhe (15) aufweist, wobei die Fahrerkabine (4) ferner ein Staufach oder eine andere schwere Struktur (16) und eine Klampe (17) nach einem der vorhergehenden Ansprüche umfasst, wobei die Klampe (17) an einem oberen Teil (18) des Staufachs oder der anderen schweren Struktur (16) befestigt ist und die Klampe (17) mit der Klampeaufnahme (9) in Eingriff steht:
- wobei der Klampenbasisabschnitt (19) an dem Staufach oder einer anderen schweren Struktur (16) befestigt ist;
- wobei der Armabschnitt (20) von dem Klampenbasisabschnitt (19) zu der inneren Vorderfläche (7) des oberen Wandteils (6) vorsteht, wobei die untere Armoberfläche (21) in die untere Klampenaufnahmeöffnungskante (11) eingreift;
wobei die Hakenabschnitt-Haltefläche (26) mit der Rückfläche (8) des oberen Wandteils (6) der Fahrerkabine (4) in Eingriff steht;
das Gesamtmaß der Armdicke (AT) und der Führungsprofilhöhe (GPH) kleiner als die Klampenaufnahmeöffnungshöhe (15) ist;
das Gesamtmaß der Armdicke (AT), die Führungsprofilhöhe (GPH) und die Halteblockhöhe (RBH) der Klampenaufnahmeöffnungshöhe (15) entspricht und das Gesamtmaß der Hakenabschnittsdicke (HT) und der Führungsprofilhöhe (GPH) kleiner als die Klampenaufnahmeöffnungshöhe (15) ist.

4. Straßenfahrzeug (1) nach Anspruch 3, wobei die Kabinenwand (5) einen Wandabschnitt (30) aufweist, der unter dem oberen Wandteil (6) positioniert ist, wobei der Wandabschnitt (30) mit Wandbefestigungslöchern (31) versehen ist, wobei das Staufach oder die andere schwere Struktur (16) einen unteren Teil (32) aufweist, der mit Schrankbefestigungslöchern (33) versehen ist, und wobei das Straßenfahrzeug (1) Befestigungselemente umfasst, die sich durch die Schrankbefestigungslöcher (33) und die Wandbefestigungslöcher (31) erstrecken.

5. Straßenfahrzeug (1) nach Anspruch 3 oder 4, wobei der vordere Endhakenabschnitt (23) eine Hakenabschnittbreite (HPW) aufweist, die der Klampenaufnahmeöffnungsbreite (14) entspricht.

## Revendications

1. Crampon (17) comprenant :
- une partie base de crampon (19) ayant une extension inférieure (19A) pourvue de trous de montage de crampon (38) ;
- une partie bras (20) ayant une surface de bras inférieure (21), une surface de bras supérieure (22) et une épaisseur de bras (AT) définie par une distance minimale entre la surface de bras inférieure (21) et la surface de bras supérieure (22) ;
- une partie crochet d'extrémité avant (23) faisant saillie de la partie bras (20), ladite partie crochet d'extrémité avant (23) ayant une surface supérieure de partie crochet (24) alignée avec la surface de bras supérieure (22) et une surface inférieure de partie crochet (24A), ladite surface supérieure de partie crochet (24) présentant un bord avant de partie crochet (25) et ladite partie crochet d'extrémité avant (23) présentant une épaisseur de partie crochet (HT) définie par la distance maximale entre la surface supérieure de partie crochet (24) et la surface inférieure de partie crochet (24A), ladite épaisseur de partie crochet (HT) étant supérieure à l'épaisseur de bras (AT) et une surface de maintien de partie crochet (26) orientée vers la partie base de crampon (19) ;
- un bloc de retenue à ressort (28) disposé de manière coulissante sur la partie bras (20) entre une position de verrouillage de crampon et une position de déverrouillage de crampon, ledit bloc de retenue à ressort (28) ayant une surface de bloc de retenue avant (29), ledit bloc de retenue (28) étant sollicité par un ressort à l'écart de la partie base de crampon (19) dans la position de verrouillage de crampon, ledit bloc de retenue (28) étant agencé pour être glissé contre la force du ressort en direction de la partie base de crampon (19) afin d'amener la surface de bloc de retenue avant (29) dans la position de déverrouillage de crampon à une distance de déverrouillage du bord avant de partie crochet (25) ;
**caractérisé en ce que** la partie bras (20) fait saillie de la partie base de crampon (19) dans une direction d'extension de partie bras sensiblement perpendiculaire à la partie base de crampon (19), et **en ce que** ledit crampon (17) comprend :
- un profil de guidage (27) disposé d'un seul tenant au niveau de la surface de bras supérieure (22), ledit profil de guidage (27) s'étendant dans la direction d'extension de la partie bras, le profil de guidage (27) faisant saillie avec une hauteur de profil de guidage (GPH) au-dessus de la surface de bras supérieure (22) ;
- le bloc de retenue à ressort (28) est disposé de manière coulissante sur le profil de guidage (27) entre la position de verrouillage de crampon et la position de déverrouillage de crampon, ledit bloc de retenue à ressort (28) ayant une surface de bloc de retenue avant (29), ledit bloc de retenue (28) étant sollicité par un ressort à l'écart de la partie base de crampon (19) dans la position de verrouillage de crampon dans laquelle la surface de bloc de retenue avant (29) est positionnée au-dessus du bord avant de partie crochet (25), ledit bloc de retenue (28) étant agencé pour être glissé contre la force du ressort en direction de la partie base afin d'amener la surface de bloc de retenue avant (29) dans la position de déverrouillage de crampon à une distance de déverrouillage du bord avant de partie crochet (25) ; ledit bloc de retenue à ressort (28) s'étendant à une hauteur de bloc de retenue (RBH) au-dessus de la hauteur de bloc de guidage.

2. Crampon (17) selon la revendication 1, dans lequel le bloc de retenue à ressort (28) présente des surfaces latérales (34) pourvues d'évidements (35).

3. Véhicule routier (1) comportant une cabine de conducteur (4), ladite cabine de conducteur (4)
comprenant une paroi de cabine (5), ladite paroi de cabine (5) ayant une partie de paroi supérieure (6) avec une surface avant intérieure (7) et une surface arrière (8) et comprenant un récepteur de crampon (9) avec une ouverture de récepteur de crampon (10) définie par un bord inférieur d'ouverture de récepteur de crampon (11), un bord supérieur d'ouverture de récepteur de crampon (12) et des bords latéraux d'ouverture de récepteur de crampon (13), ladite ouverture du récepteur de crampon (10) ayant une largeur d'ouverture de récepteur de crampon (14) et une hauteur d'ouverture de récepteur de crampon (15), ladite cabine de conducteur (4) comprenant en outre un compartiment de stockage ou une autre structure lourde (16) et un crampon (17) selon l'une quelconque des revendications précédentes, ledit crampon (17) étant fixé à une partie supérieure (18) du compartiment de stockage ou d'une autre structure lourde (16), et ledit crampon (17) venant en prise avec ledit récepteur de crampon (9) ;
- la partie base de crampon (19) est fixée au compartiment de stockage ou à une autre structure lourde (16) ;
- la partie bras (20) faisant saillie depuis la partie base de crampon (19) jusqu'à la surface avant intérieure (7) de la partie de paroi supérieure (6), la surface de bras inférieure (21) venant en prise avec le bord inférieur d'ouverture de récepteur de crampon (11) ;
la surface de maintien de partie crochet (26) venant en prise avec la surface arrière (8) de la partie de paroi supérieure (6) de la cabine de conducteur (4) ;
la dimension totale de l'épaisseur de bras (AT) et de la hauteur de profil de guidage (GPH) étant inférieure à la hauteur d'ouverture de récepteur de crampon (15) ;
la dimension totale de l'épaisseur de bras (AT), de la hauteur de profil de guidage (GPH) et de la hauteur de bloc de retenue (RBH) correspondant à la hauteur d'ouverture de récepteur de crampon (15) et la dimension totale de l'épaisseur de partie crochet (HT) et de la hauteur de profil de guidage (GPH) étant inférieure à la hauteur d'ouverture de récepteur de crampon (15).

4. Véhicule routier (1) selon la revendication 3, dans lequel ladite paroi de cabine (5) a une partie de paroi (30) positionnée sous la partie de paroi supérieure (6), ladite partie de paroi (30) étant pourvue de trous de montage de paroi (31), dans lequel le compartiment de stockage ou une autre structure lourde (16) a une partie inférieure (32) pourvue de trous de montage d'armoire (33) et dans lequel le véhicule routier (1) comprend des fixations s'étendant à travers les trous de montage d'armoire (33) et les trous de montage de paroi (31).

5. Véhicule routier (1) selon la revendication 3 ou 4, dans lequel la partie crochet d'extrémité avant (23) a une largeur de partie crochet (HPW), ladite largeur de partie crochet (HPW) correspondant à la largeur d'ouverture de récepteur de crampon (14).
